# EUROPEAN PATENT SPECIFICATION

(11) **EP 1 964 066 B1**
(45) Date of publication and mention of the grant of the patent: **07.09.2011**
(21) Application number: 05826396.3
(22) Date of filing: 21.12.2005
(51) Int. Cl.: G06T 13/00

(54) **METHOD FOR CONTROLLING ANIMATIONS IN REAL TIME**
VERFAHREN ZUR STEUERUNG VON ANIMATIONEN IN ECHTZEIT
PROCEDE DE CONTROLE D'ANIMATIONS EN TEMPS REEL

(43) Date of publication of application: 03.09.2008
(73) Proprietor: Interagens S.R.L., 00155 Roma (IT)
(72) Inventor: RIZZO, Paola, I-00155 Rome (IT)
(74) Representative: Romano, Giuseppe
(86) International application number: PCT/IB2005/054360
(87) International publication number: WO 2007/072113

(56) References cited:
- US-A- 5 261 041
- US-A1- 2004 220 812
- US-A1- 2005 046 630
- RIZZO P: "REALIZING BELIEVABLE AGENTS: AN INTEGRATION OF THE 'AUTHOR-BASED' AND THE 'MODEL-BASED' APPROACHES" AI COMMUNICATIONS, DEPARTMENT SOCIAL SCIENCE INFORMATICS. AMSTERDAM, NL, vol. 13, no. 3, 2000, pages 145-168, XP009071239 ISSN: 0921-7126
- LALONDE P ET AL: "A model for coordinating interacting agents" PROC. GRAPHICS INTERFACE '94 CANADIAN INF. PROCESS. SOC TORONTO, ONT., CANADA, 1994, pages 149-156, XP009071623 ISBN: 0-9695338-3-7

## Description

The present invention concerns a technique for controlling animations, in particular the real time automatic selection, synchronization and adjustment of the behavior of animated characters realized with the technique of keyframes. In the current description, for the sake of simplicity and descriptive clarity, we will refer to the case of animating one or more human or animal subjects. Anyway it is to be understood that the same reasoning and the same principles can be directly applied to the case of animating any subject, even an invented one.

Animation is the illusion of movement produced by quickly showing one after another a sequence of frames, i.e. static images that are slightly different from each other in terms of form or position.

Traditionally animated characters are realized by hand-drawing, frame by frame, the various phases of body movements that they have to execute. Frames are of two types: keyframes, that contain the position of the character or of its parts in successive movements, and in-betweens, placed between a frame and the other, in which the movement is subdivided into its various phases. For example, if a keyframe contains an arm at 30° with respect to the body, and the subsequent keyframe contains the arm at 90°, the in-betweens will have to be drawn so as to let the arm gradually move from the start position at 30° to the end position at 90°. In order to reuse and combine the various parts of the body without having to fully redraw it each time, the drawings of the various parts can be placed on transparent acetate sheets that can be layered one over the other: for instance, if one has to realize an animation in which the arms are moving while the trunk is still, it is possible to draw separately the trunk in a static position and the arms in the various positions of the movement, and then form several keyframes by layering the sheets of the arms over the sheets of the body.

In the case of digital animation the technique is similar, with the difference that the transparent acetate sheets are substituted by layers of transparent pixels on which one realizes the drawings; in the case of digital animation in 3D, the hand-made drawings are substituted by three-dimensional models, and the movements are realized by modifying with several techniques the position, orientation, or shape of the models in the several frames that form the animations. One of the main differences between paper animation and digital animation is that in the second case (especially in 3D) one can automatically realize the in-betweens using the technique of interpolation, that computes the intermediate positions or shapes of the models that represent the body parts of the character between a frame and the other.

Keyframe-based animation is profoundly different from the so-called procedural animation (also named automatic animation, or goal-based animation), that can be used in 3D digital systems. The animation of this second kind is based on a set of procedures or rules that automatically control the behaviors of the character and their scheduling, and that therefore make it superfluous to realize by hand keyframes and in-betweens. The rules compute the best sequence of movements aimed at achieving a given goal, keeping into account the possible obstacles, the degrees of freedom of the body joints, and the abilities of limbs to interact with the objects that are in the environment. Examples of works on procedural animation are known from the US 6,285,380 patent by Perlin & Goldberg, Cassell et al. (BEAT: The behavior expression toolkit, Proceedings of ACM SIGGRAPH 2001, Los Angeles, August 12-17, p. 477-486), and from the EP1377937 patent by Viellescaze & Morel. The US 5,261,041 patent shows a script-based real-time animation method and system.

Automatic animation is a very powerful method for controlling animated characters in real time, however it does not substitute at all the technique of keyframe-based animation, for two main reasons. First of all procedural animation is well suited to 3D characters but is not well suited to two-dimensional characters (2D), because the rules that control the movements operate by modifying position and orientation of three-dimensional geometric models linked to each other by joints. Someone might think that 2D characters are overcome by 3D characters, but this is not the case: both because 2D is computational much more efficient than 3D, and in some circumstances it offers significant technical advantages, and because in many cases hand drawn characters can be much more beautiful than 3D characters. In the second place, procedural animation is still very far from generating movements as natural as those realized with the technique of keyframes and in-betweens: in fact, the skill of expert animators to realize animations that "work" to the eyes of the audience is very difficult to be reached by automatic methods.

In keyframe-based animation, using both paper and digital techniques, usually animations are realized and assembled by hand according to a predefined script, subdivided into several scenes (temporal intervals) of predefined duration, that define when the character has to move, which movements it has to make, for how long, and in which way. Each scene can be associated with several multimedia elements (for instance audio or spoken pieces, movies, other animations) with which the character's movements have to be synchronized. The final result of this procedure is a movie on a film or digital support, where all the frames that compose the animations are placed in sequence. The execution of the movie consists in showing on a screen, in rapid succession (for instance 20 frames per second), the frames that compose it, simultaneously with the other possible multimedia objects.

This approach has several shortcomings, that have no solution in film-based movies. Conversely, in digital movies these shortcomings can be partially overcome by means of several methods, which anyway leave open several other problems.

The first shortcoming concerns the manual association between scenes and animations. According to traditional techniques, the animations are scrupulously associated by the author to each scene. For each new or modified script it is necessary once again to associate by hand the animations to the various scenes; finally, if for some scenes there are no suitable animations available, one has to create new ones. It is clear that all this presents several shortcomings in terms of efficiency and flexibility.

In order to make the procedure more flexible, several "scripting" languages (e.g. Huang et al. (A scripting language for embodied agents, in Prendinger & Ishizuka (eds.), Life-like characters, Springer, Berlin, 2004)) and "mark-up" languages (e.g. De Carolis et al. (APML, a markup language for believable behavior generation, in Prendinger & Ishizuka (eds.), Life-like characters, Springer, Berlin, 2004)) have been created, that enable one to describe the script as a computer program or a tree respectively, and to execute it automatically, by selecting from libraries of animations and multimedia objects the elements corresponding to the instructions or nodes. Anyway these languages entail a significant manual work, and require that the association between instructions or script nodes and animations be defined by the author.

Conversely, Stone &. Lester (Dynamically sequencing an animated pedagogical agent, in Proceedings of the Thirteenth National Conference on Artificial Intelligence, pp. 424-431, Portland, OR, August 1996) assign to each animation some functional requirements and visual attributes, such as the position of the character in the frame and the zoom level, and apply a method that automatically sequences animations and audio pieces, so as to maintain a functional and perceptual consistency among the various elements of the sequence. The method has been used for realizing animated characters that assist the student of a digital education system by reacting to several types of events, such as actions executed by the student or signals coming from internal timers. Stone's technique requires a huge designing effort from the authors, who have to carefully prepare the animations in order to make them at least partially compatible with one another, and is based on rules that specifically concern pedagogical applications. Finally, Stone's method concerns the whole body of the character, while the technique proposed here is more flexible because it concerns the separate control for each body segment of the character.

The method by André et al. (Employing AI methods to control the behavior of animated interface agents. Applied Artificial Intelligence 13(4-5), 1999, 415-448) automatically produces both the scripts and the corresponding animations, and can be applied to the generation of movies concerning multimedia presentations, i.e. in which an animated character describes contents related to images. The method decomposes the presentation task in a tree, the nodes of which correspond to the various phases, and the leaves of which are elementary actions that are automatically associated to the corresponding elementary animations.

The method by André has two shortcomings: it is specialized in the generation of movies for multimedia presentations, and therefore it is not generalizable to scripts and movies of any kind, and it is completely automatic, preventing experts from creating or modifying scripts, which is often essential or preferable when one wants to reach specific artistic or communicative objectives.

A further problem that has not yet been solved by state of the art techniques is the automatic synchronization of animations with the execution of the scenes of the script.

Usually the author carefully synchronizes the animations with the scenes that compose the script: for instance, if in a given scene a character has to walk for a time x, the animator has to prepare the so-called walk cycle so as to make it last exactly x. It is easy to understand that such manually done work is long and complex.

In some systems for controlling animated characters the problem is partially solved by controlling only the head of the character, by means of a system for synthesizing speech or recognizing phonemes (sounds pronounced in a spoken piece), that synchronizes visemes (positions of the mouth and possibly of other parts of the face) with phonemes. In some cases, for instance the work by Griffin et al. (Character User Interfaces for Commercial Applications, in Proceedings of Embodied Conversational Characters as Individuals, 16the July, 2003, Melbourne, Australia), visemes are synchronized not only with phonemes, but also to other speech characteristics such as peaks, keywords, beginning of sentences.

By using this approach the character might appear unnatural, and coordinating only head movements is very limiting. Some people, among which Griffin et al., prefer to integrate the automatic synchronization of visemes with the manual synchronization of the movements of the other body segments, but in this way one falls back in the shortcoming of the manual synchronization of animations.

The already mentioned André et al. use a set of temporal constraints that are both qualitative (for instance x comes before y) and quantitative (for instance x starts 3 frames before y) in order to define the temporal relations among the various animations and the script elements. However, as already said, their method is applicable only to the case in which the script is automatically produced.

Marsella et al. (Expressive behaviors for virtual worlds, in Prendinger & Ishizuka (eds.), Life-like characters, Springer, Berlin, 2004) have realized a system that controls and synchronizes the behaviors of two human animated characters that have a dialogue: for each of their body segments several "animation directives" have been defined, i.e. single frames or short sequences of frames that reproduce respectively different static positions or small movements. The behaviors of the characters are represented by trees, that schedule the directives by putting them in sequence or parallel with respect to each other. The system produces in real time the temporal trees in response to various events, and uses them for associating the sentences spoken by the characters to suitable attitudes and little non-verbal behaviors.

This method has several limitations: it is more suited to manifest expressions and postures rather than to execute movements, and in fact the existing movements are only little gestures of the arms; it does not check the temporal compatibility between sentences and animations, just because it uses single frames and very short sequences of frames; furthermore, it only uses qualitative temporal constraints and not also quantitative ones. For these reasons the method cannot be applied to the general problem of synchronizing animations with scenes of a script described in terms of temporal intervals. ,

A third problem of state of the art techniques is the absence of variability. The characters of animation movies realized with the technique of keyframes do not have any variability of behavior: if the audience plays the movie several times, they will always see the same animations because these are defined once and for all according to the script. In order to improve the lifelikeness and beauty of the character it would be necessary to make its behavior variable.

It is possible to overcome the absence of variability by associating several animations to each scene or, as done for instance by Shaw et al. (Animating 2D Digital Puppets with Limited Autonomy, in Proceedings of the Smart Graphics 4th International Symposium, SG 2004, Springer, Berlin, 2004), by defining through a markup language an association among animations and specific elements, such as words, parts of sentences, or linguistic contexts. However, in these cases there is still the problem of manually specifying the mapping from elements to animations.

A further limitation of the techniques used so far, consists in the fact that the characters are not interactive, i.e. they cannot react to the audience behaviors. The only interactions between audience and movie are those possible with the classic buttons of the videotape recorder: interrupting, going forward, going backward, or playing movie again from the beginning, which eliminate the illusion of reality created by animated characters, while a lifelike character should react with suitable behaviors to the actions of the audience that involve it.

The most used method for trying to solve the problem, used for instance by Griffin et al., consists in realizing "branching" scripts, i.e. in which the scenes do not follow each other according to a predefined order, but rather according to the actions executed by the audience in several choice points predefined beforehand by the designer. This method is not very effective, because the interactivity is limited to the choice points that have already been planned by the author, and not efficient, because it requires to design and prepare a script with many different scenes according to the possible choices of the audience.

In some systems the problem of interactivity is solved by avoiding altogether to use a script: instead, one prepares a list of events that could occur in the environment, an animation library, and a set of rules that automatically associate each event or category of events with one or more animations from the library, as in Stone & Lester.

Even if the event-based control is extremely flexible, it cannot completely substitute the script-based control: in fact, while some applications are well suited to the event-based control, others have the script as their natural control method (think for instance of a character that has to cast news, tell a story, follow a music, or have a dialogue with another character according to a predefined script). Furthermore, in some circumstances, the author of the character might need that in a given temporal interval a specific animation is executed, for reasons that are related to the communicative or artistic goals that the author has towards the audience.

A fifth shortcoming of known techniques is that the characters are not adaptive, i.e. they cannot modify their behavior according to changes in the environment and/or in their own state. For instance, if there is an event that causes an emotional change in the character (for instance by making it "angry"), the character's behavior in the rest of the script should reflect the emotional change (the character should have an "angry" facial expression and/or posture), but in traditional animation this is not possible.

In event-based systems characters can be made adaptive by letting their behaviors reflect possible changes, in the environment or in the character's states, that are sensed between an event and the other, as done by Marsella et al. and Stone & Lester, but this is impossible in script-based systems.

Therefore, the object of the present invention is to overcome the above mentioned drawbacks with reference to state of the art techniques, by providing a method for controlling animations in real time as defined in claim 1.

Secondary characteristics of the present invention are defined in the dependent claims.

The present invention, by overcoming the aforementioned problems of state of the art techniques, entails several and evident advantages.

The present invention assumes that a predefined script exists (realized by hand or automatically), that can be possibly modified in real time according to predefined events, and it overcomes the first problem of associating by hand the animations with the scenes of the script: as explained later, the scenes are described in terms of temporal intervals, the temporal distance between scenes is computed, and a set of attributes that characterize scenes and animations is used; starting from all these elements, the animations most suitable for the current scene are automatically chosen from a library. However the possibility is given, to an author who desires it, to manually specify animations to be associated with given scenes, so as to preserve important authoring possibilities.

The second shortcoming, concerning the manual synchronization between scenes and animations, is overcome by the invention proposed here, by comparing the temporal characteristics of intervals with those of animations, which also enables the automatic synchronization of animations with each other.

In the third place, according to the present invention, a remarkable variability of animations is obtained, by preparing a library of animations of several types, and by associating animations to the various scenes, keeping into account how many times the same animation has already been executed, so as to avoid its repetition, and by selecting an animation at random in the case in which there are several animations equally suitable.

Regarding the fourth shortcoming of state of the art techniques, concerning the absence of interactivity, the present invention allows to control the character according to a script (possibly branched) or according to events, and to pass the control from one form to another as needed. In this way the animated character can follow a script but at the same time react to the behaviors of the user. Furthermore the script can be modified in real time, thereby creating an additional mechanism of branching that enables a further level of interactivity.

A fifth advantage of the present invention is given by the fact that it allows to generalize the adaptability made possible in event-based systems also to script-based systems, allowing the animated characters' behavior to change also during the execution of the script.

The solutions used according to the present invention produce significant advantages in terms of efficiency of development, because the long, complex and expensive work of manual animation is reduced, and flexibility, because by modifying the temporal intervals and their characteristics the animations automatically change as well, and one can produce characters for a vast range of applications in several fields, such as communication, education, entertainment, and services. Furthermore, such solutions produce important advantages in terms of quality of the animated characters, in that their behavior is variable rather than repetitive, reactive with respect to the audience actions rather than passive, and adaptive with respect to events of the environment rather than static.

Further advantages, characteristics and way of using the present invention will become evident from the following detailed description of a form of its realization, presented with the purpose of exemplifying and not of limiting. We will refer to the figures of the enclosed drawings, in which:

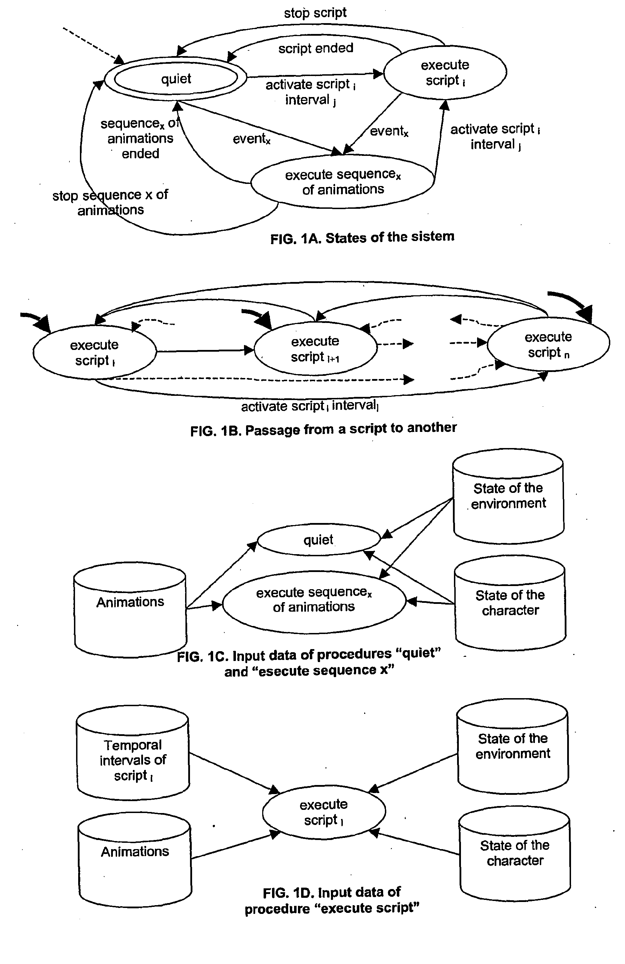

figures 1A and 1B, are schemes showing some possible states of the animation and the possible transitions among states;
figures 1C and 1D show the input data of the method according to the present invention; and
figures from to 2A to 2C are descriptive diagrams of examples of temporal intervals and animations according to the present invention.

The present invention will be described in the following by referring to the aforementioned figures.

The control method according to the present invention, can be applied to any type of animated subject (human, animal, or invented) immersed in an environment that can influence its behavior. The method can be applied to several subjects simultaneously in the same environment.

According to the present invention, the control system of each subject can be in several "animation states". In each of such states, the animations will be executed according to predefined rules, and also the transitions between one animation state and another will be made according to predefined rules, as explained later.

Figure 1A shows a state machine, the states of which are three possible "animation states" according to the present invention.

These states are: state of "quiet", state or "execute script", and state of "execute sequence of animations".

According to the preferred realization form of the invention, the control system starts in the quiet state, where the subject executes little animations so as to "look alive", without any relation with a script. In the "execute script" state several animations are chosen, synchronized and executed according to a given script among the available ones, starting from a given temporal interval. Finally, the state "execute sequence of animations" generically indicates a state, different from the preceding ones, in which the character executes a sequence of animations, without any relation with a script.

In the quiet state it is possible to choose which script to go to, as shown in figure 1A and by the large arrows in figure 1B. From each script it is possible to go to any other script, as shown in figure 1B by the other arrows (the dotted ones refer to the passage to scripts that are not represented in the diagram for the sake of brevity). An analogous diagram, not represented, concerns the passage from a sequence of animations (independent from scripts) to another.

As shown in figure 1C, in the states of "quiet" and of "execute sequence of animations" the system uses a library of animations and the description of the "interval states", i.e. the characteristics of the subjects and of the environment. Figure 1D shows that, in the state of "execute script", the system uses the same data of the other states, plus the description of the temporal intervals that form the script. Starting from such input data, in all of the three states of animation the system applies predefined rules for selecting and executing the animations.

Let us now describe the three types of input: scripts, animations, internal states.

The "script" is a sequence of temporal intervals, possibly separated by pauses. The temporal intervals are the parts of the script during which the character has to execute its actions, while the pauses are the parts in which the character does not have to execute specific actions.

Since the animations, that are realized as sequences of frames, have to be synchronized with the temporal intervals, the script is also measured sin terms of frames, by computing the duration in number or frames starting from the duration in seconds. For example, if the animations are prepared so as to be visualized at a frequency of 12 frames per second, a script that lasts 30 seconds equals to a sequence of 30 * 12 = 360 frames. Each script starts at frame 1 and ends at frame n; the temporal intervals and pauses are limited portions of the script enclosed between 1 and n.

Each temporal interval is characterized by a first set of identifying data. As an example, these first data can comprise one or more of the following parameters:
- TIID, temporal interval identifies, used for identifying the temporal interval inside a script;
- TIIF, initial frame;
- TIEF, end frame;
- TID, duration of the temporal interval in terms of frames;
- OBJ, possible multimedia objects (images, movies, audio pieces) contained in the interval;
- BEAT, beats (single frames where are salient points of the multimedia object(s) associated with the interval, for instance voice or sound peaks, movies pieces, specific musical moments)
- RAN, requested animations, i.e. references to animations of a library that have explicitly been specified by the author, among which one is to be associated with the interval;
- TIALFA, optional attributes described in alphanumeric terms (for instance as strings or logical predicates), that can represent various characeristics of the temporal intervals, such as a communicative goal, or the contextual reference to a given position or object of the environment where the character acts; and/or
- TINUM, optional attributes described in numeric terms (for instance the level of cheerfulness or sadness of the temporal interval).

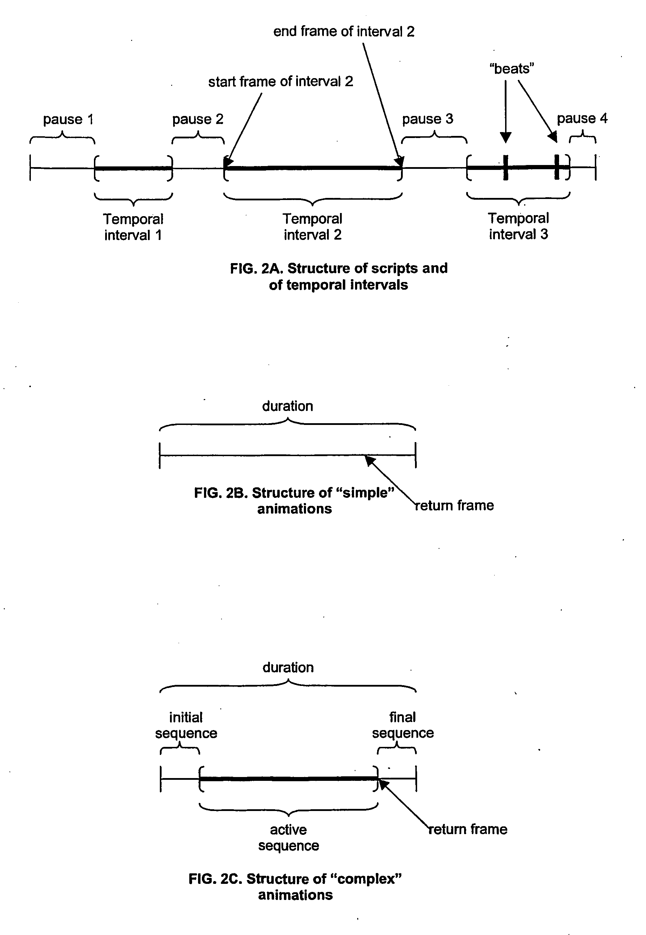

Figure 2A is a diagram showing, as an example, a temporal structure of a script and of the corresponding temporal intervals.

The following is an example of first identifying data of a temporal interval belonging to a script:
- TIID= "welcome";
- TIIF = 52;
- TIEF=100;
- TID = 48;
- OBJ = [audio piece ="This is the switch for turning on the device.", movie = "movie_show_switch"];
- BEAT = [62, 70];
- RAN = ["point-to_the_right"];
- TIALFA = [];
- TINUM = [sociability = 5]

It is to be noticed that the characteristics of the temporal intervals can be set both manually and by an automatic system; for instance, in the case in which a temporal interval contains a spoken piece, the temporal characteristics (initial and end frame, duration, beats) could be determined by a speech analysis or synthesis system, while the other characteristics could be determined by an artificial intelligence system.

Furthermore it is to be noticed that, at any time, the part of a script that is not being executed can be modified in real time by an automatic system, by substituting temporal intervals and pauses with different temporal intervals and pauses: in correspondence with the new temporal intervals, the character will execute the animations chosen one at a time using the selection criteria that will be defined later.

Regarding the animation library, each subject (also said character), to which the method described here is to be applied, comprises one or more segments, organized in a structure of the type of a hierarchical tree including at least one node. To each node corresponds the respective segment of the subject. For each of said one or more segments, a set of segment animations is defined, each of which consists of a sequence of frames and is characterized by a set of second identifying data.

Therefore, a tree can consist of a single node that includes the whole subject, or it can be subdivided into very detailed segments. The division is set by the author on the basis of the level of detail to which he wants the subject behaviors to be controlled.

For instance, assuming that the character is human, the body could be coarsely divided into head, upper part, lower part; or, at a higher level of detail, the head could include eyes, mouth, and eyebrows, the upper part could be divided into trunk and arms, and each of the latter could include arm, forearm and hand. We remind that the characters can also represent inanimate subjects, so for instance a character representing a chair could be divided into back, seat and legs.

The root of the segment tree is the most important component of the subject, with which all the other segments can be synchronized; for instance, in the case of human or animal characters, the root can be the head, that constitutes (together with the children composing the face) the most expressive segment of the subject, with which the other segments can possibly be synchronized.

It is very important to notice that the various segment animations, when they are not scheduled with respect to one another, are independent and can be executed simultaneously.

It is to be noticed that the author can put in a single animation the simultaneous movements of several segments; i.e. including not only a single node of the body tree, but also its children. For instance, if the character is a human subject and the node is an upper limb, one can prepare an animation for the whole limb that includes forearm, arm and hand. Similarly, it is possible to prepare animations that include the whole character, i.e. the whole segment tree. In this way one enables the author who wants it, to keep in some cases a strong control over the reciprocal relations among the various movements of the segments, avoiding that they be synchronized automatically one with each other by means of the method that will be described later on.

Each animation is described in terms of second identifying data. As an example, such secondary data can comprise one or more of the following parameters:
- AID, animation identifier, used for indexing the animation in a library of animations;
- AD, animation duration, i.e. total number of frames;
- IFN, initial sequence (optional), i.e. the number of frames, starting from the first one, in which the segment of the character prepares itself to its own movement or to the movement of its children segments: for instance, if the character is human, the body segment is the arm, and the animation has to represent the hand that waves, the corresponding initial sequence could consist in raising the arm at the right height for moving the hand in the waving gesture; conversely, if the body segment is a speaking element (the head in the case of human or animal characters), and the animation has to represent the character that speaks, the initial sequence could consist in positioning the head so as prepare it to show the mouth;
- AFN, active sequence (optional), i.e. the number of frames after the possible initial sequence, in which the body segment of the character moves or is ready for the movement of its children segments: considering the previous examples, an active sequence could be the one in which the head "speaks" by moving the mouth, or the one in which the arm waves by moving the hand. The active sequence can consist of a single frame or a few frames, which if necessary can be reproduced cyclically in order to last for an indefinite time: this solution is used for letting the active sequence last for the whole duration of any temporal interval;
- FFN, final sequence (optional), i.e. the number of frames after the active sequence in which the segment of the character ends the movement: considering the previous examples, if the segment is the arm, and the animation has to represent the hand that waves, the final sequence could consist in lowering the arm after having moved the hand in the waving gesture; conversely, in the case of the head that has to speak, the final sequence could consist in putting the head in a desired position after it has talked;
- ASF, start frame, i.e. the frame in which the movement of the body segment actually starts (it is to be noticed that an animation can have at its beginning some frames in which the body segment is static);
- ARF, return frame: as better explained later, regarding the procedure "interrupt animations", it is the number of the frame used for interrupting an animation in a natural way; in the case of animations provided with a final sequence, this frame is the first of the final sequence;
- PRED-CYCLE, predicate of cyclic animation: if its value is true, the execution of the whole animation is to be repeated for the whole duration of the temporal interval with which it has to be synchronized; if its value is false, the animation is to be executed just once during the temporal interval. This predicate is used for characterizing the animations that have to be executed cyclically during the temporal interval, such as, for instance, the "walk cycles" previously mentioned, or the mouth animations used by human or animal characters for talking. In fact a mouth animation, when it is not essential to exactly match visemes to phonemes in a spoken piece, can be prepared so that the mouth successively plays a certain number of visemes chosen at random, and when the visemes end the mouth animation starts again from the beginning, as if the character were always pronouncing the same sequence of vowels and consonants;
- PRED-RANDOM, predicate of randomization: if its value is true, the execution of the animation can be started even after the beginning of the temporal interval with which it has to be synchronized; if its value is false, the execution of the animation has to start together with the beginning of the temporal interval with which it has to be synchronized. This predicate is used for deciding whether an animation can start at any time during the temporal interval, provided that it ends within the end of the interval and therefore it results synchronized with it altogether. For instance, in the case of a human character that gestures while he is talking, it is a good thing that the movement, aimed at indicating an object that the character is describing, starts when the corresponding temporal interval and the audio piece start, while a gesture of the arm without any particular meaning can start even after the start of the temporal interval, provided that the animation ends within the end of the temporal interval;
- PREC, set of preconditions (optional), described in alphanumeric terms (for instance as strings or logical predicates), that represent environmental conditions that must be true in order to execute the animation (for instance, an animation could have as precondition that in the time preceding its execution a given event has occurred); if the set of conditions is empty, the animation is always executable;
- AALFA, set (possibly empty) of attributes described in alphanumeric terms (for instance as strings or logical predicates), that can represent various characteristics of the animations such as a communicative goal, or the contextual reference to a given position or object in the environment in which the character is (as in the gesture of indicating to the left);
- ANUM, set (possibly empty) of attributes described in numeric terms (for instance the level of cheerfulness or sadness of the animations);
- S, scores, a set of variables that refer to each of the attributes, and that are used for memorizing the scores that the system attributes to each animation through the procedure "compute score" (described later);
- HIS, history, a variable containing the number of times in which the animation has been executed; and/or
- WEIS, weighted score, a variable containing the overall score attributed to the animation by the procedure "compute score" (described later), determined through an algebraic sum of the various scores and of the history multiplied by their respective "weights".

The following example shows how one could describe an animation of the arms of a human character after the animation has already been executed twice, and before the scores have been computed:
- AID = "wave_5";
- =44;
- IFN=6;
- AFN=30;
- FFN=8;
- ASF=7;
- ARF=36;
- PRED-CYCLE =false;
- PRED-RANDOM = false;
- PREC=[];
- AALFA =[communicative goals = [welcoming, greeting]];
- ANUM = [cheerfulness = 3; shyness = 4];
- S = [communicative goals = 0; cheerfulness = 0; shyness = 0;]
- HIS = 2;
- WEIS = 0.

The control method according to the present invention involves a step of selecting in real time, from a library of animations, one or more of the available segment animations. The animations can be selected, as explained in detail later, on the basis of said first identifying data, or on the basis of said first and second identifying data, and therefore, the selected segment animations will be executed in real time.

According to the present invention, the segment animations can be divided into two categories: "simple", i.e. without initial and final sequence, and "complex", i.e. provided with an active sequence preceded or followed respectively by an initial or final sequence. The temporal structure of simple animations is represented in figure 2B, while the structure of complex animations is represented in figure 2C.

It is important to notice that an animation can also be "static", i.e. it can keep a body segment in a given position for the whole duration of the animation. For instance, in the case of a character whose goal is to cast news, the trunk could remain static during most of the time.

According to the present invention, some segments can be associated with some "elementary animations", that consist of little movements of very short duration, preferably no more than 4-5 frames. For instance, in the case of a human character, the eyelids can go up and down, the eyebrows can be raised, or the hand can execute some small movements typical of the gestures done by a person who is talking.

The elementary animations can be used in at least four circumstances:
a) during the execution of simple or complex animation of the parent segments: for instance, the natural movements of eyelids that close and open can be executed during the execution of the animations of the head, that has the eyes among its children segments;
b) when a complex animation of the parent segment, arrived at the end of the initial sequence, is suspended and waiting for a temporal interval to start, as it will be better explained later;
c) when the character is in the quiet state; and
d) in coincidence with the "beats" of the temporal intervals.

The short duration of elementary animations allows to execute them at anytime for letting the character look "alive", without interfering with other animations, and to start their execution in coincidence with the frame of a beat, without that their carrying out requires special calculations for the synchronization. As it will be described later, when an elementary animation has not to be synchronized with any beat, its execution is controlled by rules and internal timers endowed with random variations.

In order to always make it possible to show the character in action during the state "execute script", it is necessary to prepare one or more "default animations" having the following characteristics:
§ they can always be executed, i.e. they have an empty set of preconditions;
§ they have a possible active sequence of minimal duration, so that it can be synchronized with temporal intervals of any length;
§ they have a possible initial and final sequence made of a single frame, so that they can be inserted in any pause between a temporal interval and the other.

If the library contains at least one default animation, the step of selecting the animations to be executed, described later, is always able to return in output at least one animation applicable to the current situation, and having a duration compatible with the current temporal interval.

In the quiet state, the character has to "look alive", and therefore it has to continue moving, but its movements have to be light, hinted (a character in the quiet state is analogous to a person who is not executing significant actions, but that continues breathing, slightly moving the body, changing position from time to time, etc.). The method according to the present invention, entails that one provides some animations suitable to be executed in this state. For instance, in the case of human characters, an animation suited to the quiet state could consist in putting the head in a slightly inclined position, keeping it there for a few seconds, and then putting it back in its start position. A movement of this kind can be realized as a complex animation, in which the initial sequence consists in inclining the head, the active sequence consists in a single frame, to be executed repeatedly during a time defined by an internal timer, in which the head is in the same position, and the final sequence puts the head back in its start position. The small movements suited to the quiet state can also be realized as simple or elementary animations. For instance, in the case of an animal character, a simple animation could consist in passing from the sitting position to the standing position, while an elementary animation could consist in slightly moving the tail.

The "internal states" concern the subject and the environment, and are totally independent of the characteristics of the temporal intervals.

According to the present invention, one therefore provides a set of subject attributes, each of which describes subject's own characteristics. The subject of the animation can have attributes related to unchanging characteristics (for instance, an extroverted personality) and attributes related to variable characteristics (for instance, being hungry, tired, etc.) that can be modified in real time by various internal and/or external events. These subject attributes can be both alphanumeric and numeric and are used in all the animation states, in order to choose the animations to execute closest to the "nature" and state of the character.

According to the present invention, one also provides a set of environment attributes, each of which describes environment's own characteristics, i.e. features of the scenario in which the animated character is located, of the objects that compose it, of the other characters possibly present in the environment, and of the possible audience. As in the case of the character state, the environment state is also composed by variable characteristics (for instance the positions of movable objects) and fixed characteristics (for instance the dimensions or color of the objects). The environment state as well can have numeric and alphanumeric attributes that can be compared with those of the character and of the animations, during the selection of the animations to be executed. For instance, if the animated character is a tropical plant, and the environment is a room where the audience can control the level of humidity, temperature, and light, the attributes of the environment could be compared with those of the plant, in order to let the latter execute different animations according to the environmental variations; for instance, the leaves could move sinuously when the room is humid, warm and very bright, and in a rigid way when the room is dry, cold and dark.

The variable features of the character and environment state can change as a function of events, that can be activated both by the audience and by the internal mechanisms of the system (for instance timers or inference rules). These changes influence the choice of animations to execute regardless of the characteristics of the temporal intervals, both because the preconditions of the animations can change, and because the character state can change. For instance, the audience or another character could remove from the scenario the only available chair, so that the character cannot execute any more the animation of "sitting", that has as its precondition the presence of the chair; furthermore, having taken off the chair could cause in the character the passage to an angry state, and consequently influence the choice of the animations successive to the event.

According to the present invention, the events that generate changes in the character's and environment's state can be generated at any time, but they are preferably processed by the character's control system only at the time of executing the procedure for choosing the animations.

Going back to the animation states, the transitions from one state to another can be done automatically during the control, on the basis of predefined rules, or as a consequence of events that can be external, i.e. caused outside of the control system (interactivity with an audience etc.), or internal (activation of timers or more). The events that can produce transitions in the control system of the animated characters are six:
1. "activate (scriptₓ intervaly)": it causes the interruption of the current animations, and the entrance in the state of execution of a given script, starting from the specified interval. This event is applicable to all of the three available states; if applied to the state "execute (scriptₓ intervaly)", the event also interrupts the execution of the current temporal interval, and causes the passage to the execution of another temporal interval and/or script.
2. "script ended": it is activated when the current script has ended, and causes the return to the quiet state. It is to be noticed that this event, thanks to the automatic synchronization between animations and scripts that will be described later, does not require to interrupt the current animations, because the latter end together with the script.
3. "event x": x is any event defined by the designer, different from all other events listed here, that causes the exit from the quiet state, or from the execution of a script, or from the execution of a sequence y of animations, and therefore it causes the interruption of the possible script and of the animations being currently executed, and the entry into the state of execution of a sequence x of animations prepared by the designer and independent of any script.
4. "sequence x of animations ended": it is activated when the sequence x of animations has ended, and causes the return to the quiet state.
5. "stop script": this event, applicable only to the state "execute script,", interrupts the execution of the script and of the current animations, and causes the passage to the quiet state.
6. "stop sequence x of animations": this event, applicable only to the state "execute sequence of animations", causes the interruption of the execution of the animations that had been activated by event x, and the return to the quiet state.

The events listed above, except for the 2nd and 4th that are automatically determined by a signal of end of script or end of animations, can be activated at any time both by the audience, and by system rules (for instance one or more timers). This way of processing the transitions between the states of the system makes the animated character interactive, because it enables the latter to follow a script but also to react to the user's behaviors; in other words, the method allows to control the character both according to a script and according to events, and to pass the control from one form to another when necessary.

In the rest of the current description, we will describe with better detail the procedures used for implementing the steps of the control method. It is evident that these procedures can then be realized through computer products, in order to realize a program for performing and controlling animations in real time, according to what is told here.

### Procedure "Change state"

The procedure manages the transitions from one animation state to another, as a function of internal and/or external events. The procedure receives in input the current event and state, verifies that the current state is the one to which the event is applicable, modifies the state, and activates, in accordance with the event, one or more of the following procedures, aimed at producing the changes associated with the new state:
§ "Execute (scriptₓ intervaly)" (abbreviated in "Execute script"): this is the main procedure of the system, described later, which selects and executes the animations of the character in synchronization with a script;
§ "Interrupt script": it consists in stopping the execution of the current script;
§ "Interrupt animation": it is activated at the occurrence of events 1, 3,4, and 6, and will be described later. This procedure stops all the current animations in a gradual and natural way, i.e. without sudden interruptions of movements;
§ "Quiet": it selects and executes the animations suited to the quiet state;
§ "Execute sequence x of animations": it consists in executing a sequence of animations associated with the event x.

The procedure "Change state (event, state)" is described in the following. The terminology and meta-language used make the procedure absolutely clear and self-descriptive.

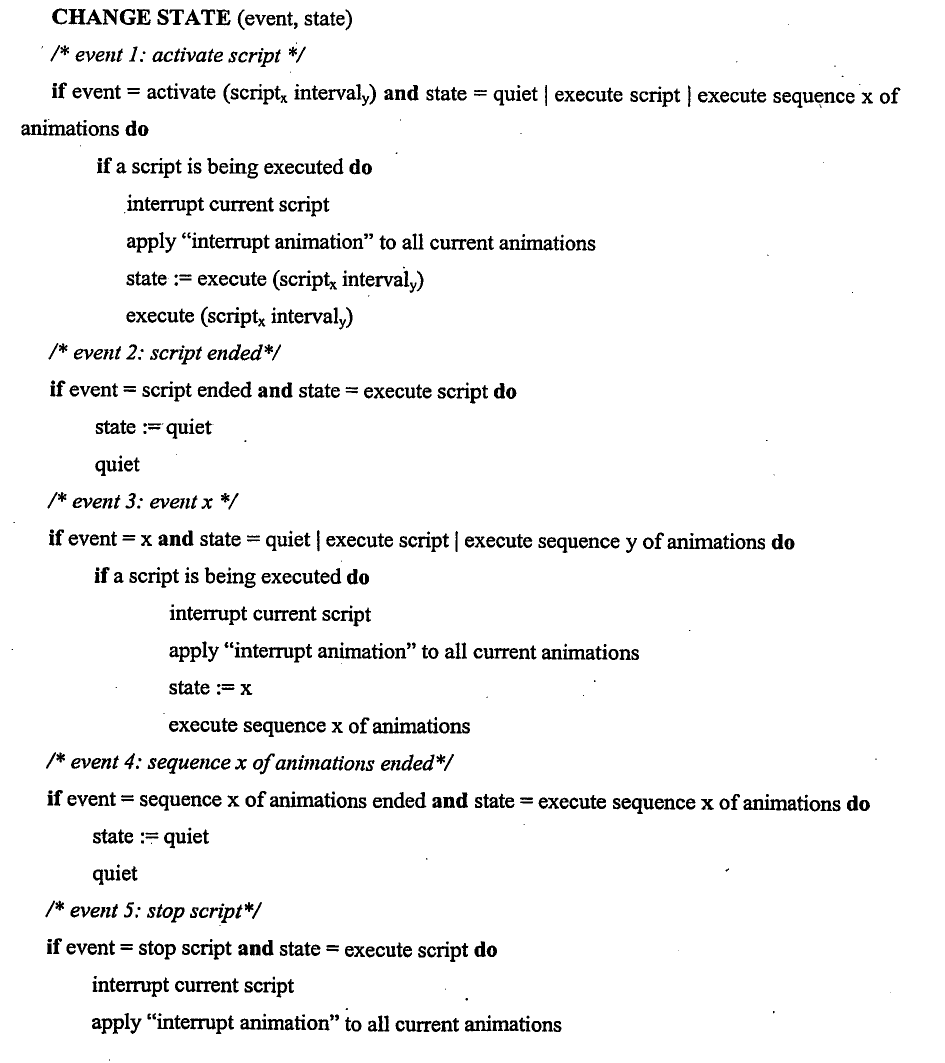

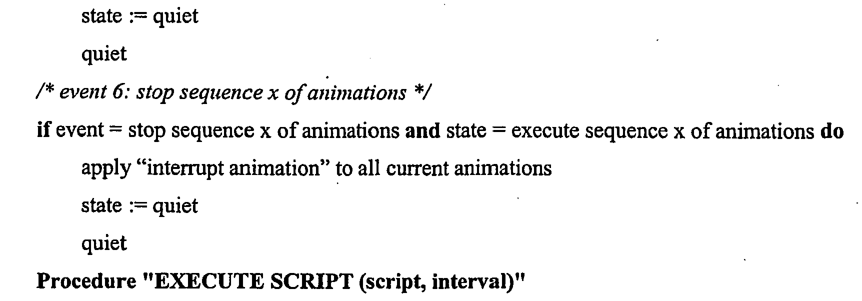

At the occurrence of the event activate (scriptₓ interval_{y}) mentioned above, the system passes from the state of "quiet" to the state of "execute script": here the procedure "execute script" is activated, and it determines the current interval of the script, chooses the animations to execute during the interval, and synchronizes the execution of the animations with the execution of the interval.

The steps of this procedure are the following:
1: check of the end of the script: if the script has ended, the systems goes back to the quiet state, otherwise the procedure goes ahead with the successive steps.
2. update of the intervals: starting from the last executed interval, the current and successive intervals are determined (they are respectively the interval coming after the one that has just been executed, and the interval subsequent to that). If no interval has been executed yet, the current interval is the one passed to the procedure through the argument "interval" (in the default case, the interval is the first one of the script).
3. computation of the "pre-pause" and of the "post-pause":
   a. the pre-pause is the pause preceding the current temporal interval, and is computed as the difference between the first frame of the current interval and the current frame of the script;
   b. the post-pause is the pause following the current temporal interval, and is computed as following:
      i. if the current temporal interval is the last one of the script, the post-pause is the difference between the last frame of the script and the last frame of the current temporal interval;
      ii. otherwise (i.e. if the current temporal interval is not the last one of the script) the post-pause is the difference between the first frame of the subsequent temporal interval and the last frame of the current temporal interval.
4. selection of a node of the tree of body segments: the procedure selects one by one, in a recursive way, the children of the current node of the tree of the character's body segments. At the first execution of this phase of the procedure, the current node is the root of the tree (which we remind is the most important body segment of the character).
5. choice of an animation: each node of the animations tree is applied the procedure "Choose animation" (described later), which finds the best animation available as a function of the current temporal interval, of the state of the character, and of the state of the environment. It is to be noticed that it is possible to choose for a node an animation that also includes the children of that node, and in that case the children of that node are marked as explored. For instance, if the node is an upper limb, some suitable animations for the whole limb have been prepared, and one of those animations is chosen, at step 6 the children of the node taken into account (arm, forearm and hand) will result as already explored, and the procedure will go ahead with other nodes. In the extreme case, in this phase it is possible to select an animation that concerns the whole body of the character, in which case in phase 6 the whole body tree will result as already fully explored. Finally, it is important to notice that the children of each node are positioned according to the position in which the parent is located: for instance, if the parent is the head, and one chooses for it an animation that makes it rotate for 30°, the children of this node (the mouth, the eyebrows, the eyelids) will be positioned appropriately with respect to the head.
6. check of the exploration of the body tree: if the tree of body segments has been completely explored and for each node an animation has been chosen, the procedure goes ahead with the successive steps, otherwise it goes back to step 4.
7. removal of the pre-existing animations: the animations that have been previously loaded and executed are removed.
8. loading of the chosen animations: for each body segment that has been considered, the system loads the corresponding animations- chosen at step 5.
9. synchronization of the animations with the script: through the parallel execution of the procedures **"Synchronize complex animation", "Synchronize simple animation":** and **"Synchronize elementary animation"** (described later), applied to the respective types of animations, each of the animations loaded at the preceding step is executed in synchronization with the others and with the execution of the current temporal interval. At the end of this step, and therefore after having executed the current temporal interval and the corresponding animations, the procedure goes back to step 1.

Regarding the last step, the synchronized execution of the script and of the animations is based on a digital system analogous to the one that reproduces movies containing several audio/video "levels": the synchronization consists in letting the various independent playheads execute (i.e. reproduce) simultaneously the frames of each multimedia object possibly contained in the script and those of each animation. It is to be noticed that the descriptions of the synchronization procedures, provided later, for the sake of brevity consider only the execution of the animations, but the reproduction of the latter occurs simultaneously with the reproduction of the script: in other words, when one has to execute an animation in synchronization with the script, it is assumed that the reproduction of each of the frames of the former occurs simultaneously with the reproduction of each frame of the latter. Furthermore, when cyclic check tests have to be executed on the state of the script, for instance in order to determine if a given frame of it has been reached, it is assumed that each test is executed after the reproduction of each frame of the script.

### Procedure "Choose animation"

This procedure selects the animations that best suit the requirements (including temporal constraints) and are closest to the characteristics of the current temporal interval, of the state of the environment, and of the state of the character and, in order to carry out its task, it uses three other procedures (**"Check synchronizability", "Compute score"** and **"Choose best animation"**) that will be described later.

The procedure is composed by the following steps:
1. Select requested, synchronizable, applicable animations: this step is actually a sequence of three successive substeps.
   a. initially the RAN parameter of the temporal interval is examined: if such feature lists one or more requested animations, the latter are selected from the library and put in a set;
   b. secondly, the procedure verifies whether such animations can be synchronized with the current temporal interval by applying the procedure **"Check synchronizability",** and all the non-synchronizable animations are removed from the set;
   c. finally, if the set contains at least one or more animations that can be synchronized with the current interval, the procedure verifies their applicability (an animation is applicable if all of its preconditions are satisfied, i.e. they are present in the state of the environment), and all the non-applicable animations are removed from the set.
2. Check of the animations produced by step 1: if the set of animations generated at step 1 is empty (i.e. there is no animation requested by the interval, synchronizable with the interval, and applicable), the procedure goes to phase 3, otherwise it goes to phase 4.
3. Selection of synchronizable and applicable animations: in this step the library of animations is explored (through the procedure **"Check synchronizability")** in search of animations that satisfy the requirements of synchronization with the current temporal interval; once the synchronizable animations are identified, the procedure selects those that are applicable in the current state of the environment. As already explained, the library contains one or more default animations that are always selectable by this step of the procedure, in that they have empty preconditions and minimal durations: this guarantees that the procedure will always produce a result.
4. Check of the animations produced in steps 2 or 3: if the set of animations produced by step 2 or step 3 contains more than 1 element, the procedure goes to phases 6 and 7, otherwise it goes to step 5. This check is used for avoiding that phases 6 and 7, which should choose among several elements of a set, are uselessy applied to a singleton.
5. return of the only available animation: the only animation generated at step 2 or 3 is returned in output and the procedure exits.
6. Compute score of the animations: here the procedure **"Compute score"** is called for assigning scores to animations, according to their proximity to the alphanumeric and numeric attributes of the current temporal interval, and according to the number of times in which they have already been executed.
7. Choice of the best animation: the procedure **"Choose best animation"** is called for choosing the best animation among those evaluated at the preceding step, in compliance with one or more predefined criteria, and the procedure exits.

### Procedure "Check synchronizability"

An animation must be synchronizable with the current temporal interval, in which one would want to execute it; such test consists of the following steps:
1. test of the type of animation: if the animation is "simple" (i.e. it does not have initial or final sequences), or it concerns a body segment different from the root, the procedure goes to phase 2, otherwise it goes to phase 3. This test is necessary because only the complex animations concerning the root of the tree of body segments can be synchronized with the script keeping into account also the initial and final sequences.
2. simplified test of synchronizability: if the duration of the animation is shorter or equal to the duration of the temporal interval, the animation is synchronizable, otherwise it it not.
3. test of synchronizability of the "complex" animation: if the initial sequence of the animation is lower or equal to the pre-interval, and the final sequence is smaller or equal to the post-interval, and the duration of the active sequence is lower or equal to the duration of the temporal interval, then the animation is synchronizable, otherwise it is not.

### Procedure "Computer score"

If the procedure **"Choose animation"** has collected in a set more than one animation, the animations belonging to this set are applied the procedure that compares their characteristics with the characteristics of the current temporal interval, with the state of the environment, and with the state of the character. The procedure computes a score to assign to each animation based on such comparison, so as to enable the choice of animations which:
- are closer to the characteristics of the temporal interval, of the character, and of the environment, so as to raise the consistency between these characteristics and the behaviors of the character;
- have been executed a smaller number of times, so as to raise the variability of behaviors.

First of all, the procedure computes the single scores to attribute to an animation according to the analysis of its characteristics, and then performs an algebraic sum of the "weighted" scores, i.e. the scores multiplied by weights (factors) specific for each characteristic. The factors are parameters that can be modified by the designer according to his needs: for instance, characteristic x could be attributed a higher importance than characteristic y by raising the weight of one with respect to the other. The weights can be set once and for all before starting the system, or they can be modified in real time according to rules set by the designer.

Since the state of the character and of the environment can change during the execution of a script, e.g. the subject state can change from "neutral" to "angry" and/or from "full" to "hungry" these changes reflect themselves on the scores assigned to the animations by **"Compute score",** and consequently on the animation chosen by **"Choose best animation",** described later.

The procedure is structured as follows:

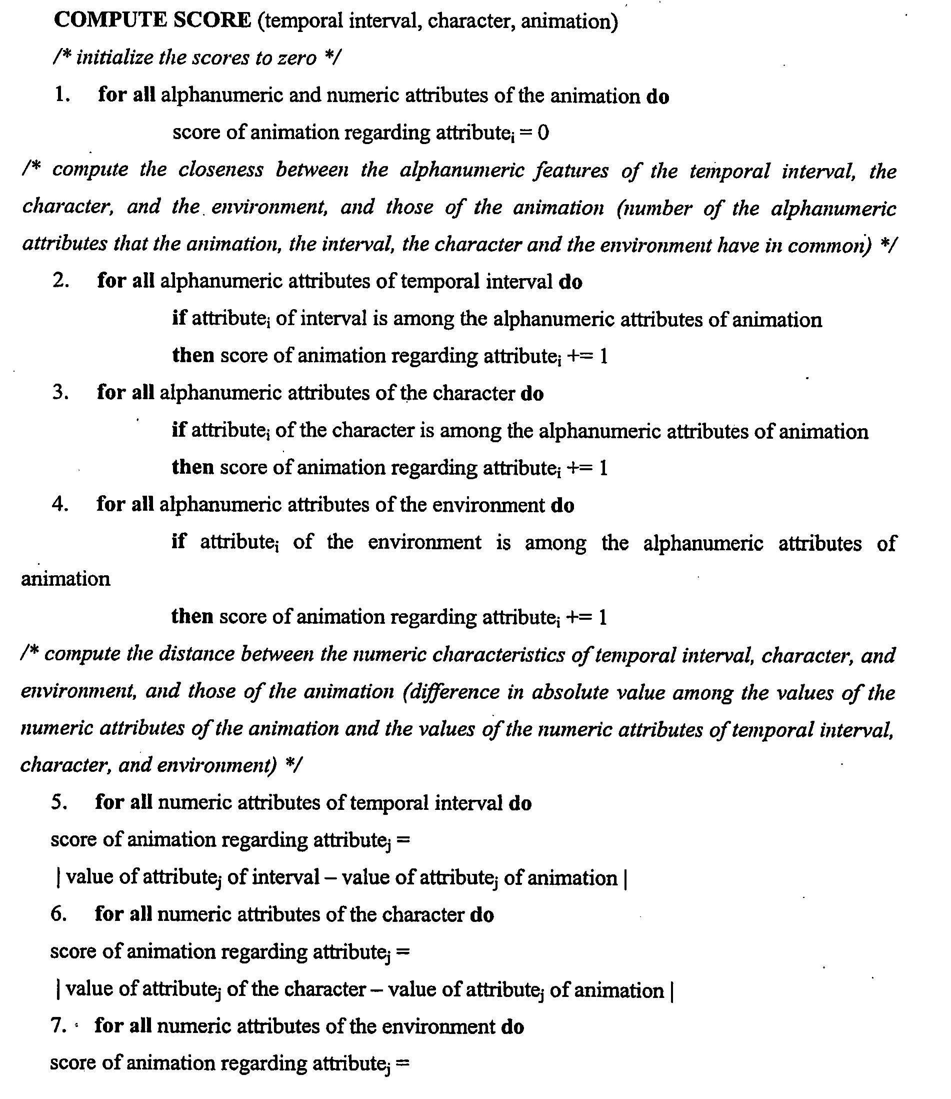

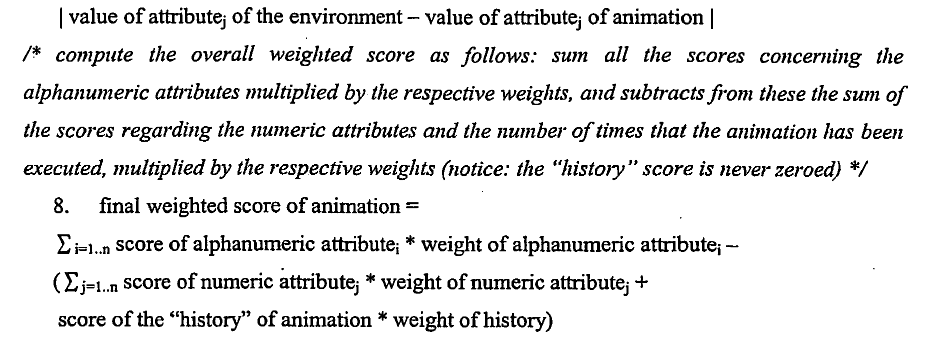

It is to be noticed that the computation of weights can be parameterized, in the sense that one can use values different from the listed ones: for instance, when computing the closeness between the alphanumeric attributes of animations and those of the other input data (steps from 2 to 4), instead of 1 unit one could use real numbers within a given range.

The scores computed by this procedure will be used by the procedure "Choose best animation", which selects the animation with the best score according to one of the criteria that can be selected by the designer.

It is to be noticed that "Compute score" can be adapted to the case in which one wants to avoid including some scores in the computation of the overall score of specific animations, so as not to "penalize" such animations with respect to others. For instance some "generic" animations where the character is static, to be used for avoiding that the character continuously moves, could not have numeric or alphanumeric attributes; because of this, their score would be lower than the score of animations having attributes similar to those of the intervals or the internal states. In order to compensate for such "unbalance" between the two types of animations, the designer can decide that, for the animations without some or all of the numeric and alphanumeric attributes, the corresponding scores are not computed, but that the score regarding the history is computed anyway. In this way the animations without attributes will have an overall score comparable with the score of the animations endowed with attributes, and the overall score will vary mainly as a function of the number of executions of each animation instead of a function of all the attributes.

### Procedure "Choose best animation"

This function analyzes the set of animations to which the procedure "Compute score" has assigned the scores and, according to the selected choice criterion, it selects the animation that best suits the criterion. To the aims of the present invention we will take into account three possible criteria: compensative, conjunctive, and lexicographic.

The "conjunctive" criterion (so called because it looks for the intersection of several attributes) uses the single scores obtained by the animations with respect to each attribute, considers only the animations having scores that reach a given minimal threshold set for each attribute, and chooses a random animation among those animations.

The "lexicographic" criterion (so defined because it is analogous to the method for ordering words in dictionaries) orders the animations in a decreasing way starting from their score regarding the most important attribute, and going on with the attributes less and less important, and chooses the first animation of the ordered set.

The "compensative" criterion (so called because it allows to compensate a low score on an attribute with a high score on another attribute) uses the final weighted score of each animation, and orders the animations in a decreasing way according to that score, so as to find that or those having the highest score: if several animations have the same highest score, a random animation is chosen among them, in order to raise the variability of animations that are executed. In the following we show the procedure **"Choose best animation"** in the case where the compensative choice criterion is used.

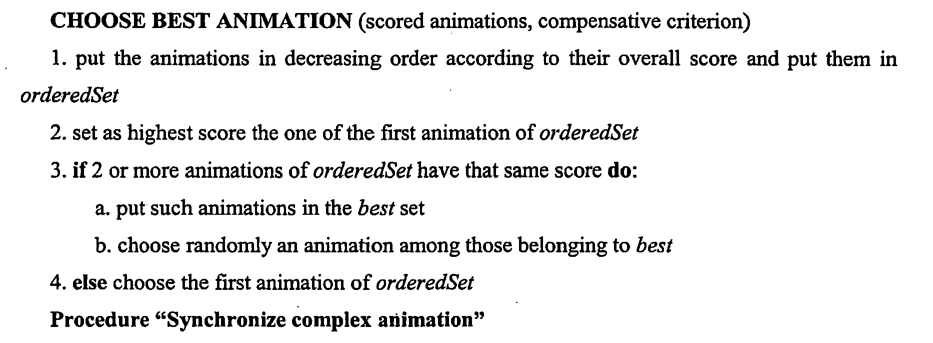

This procedure has the task of synchronizing a complex animation (i.e. one endowed with initial and final sequence) with a temporal interval. It is to be noticed that this procedure works properly thanks to the work previously done by the procedure **"Check synchronizability",** which checks that a complex animation satisfies the temporal constraints set not only by the current interval, but also by the possible pauses that precede or follow it.

The phases of the current procedure are the following:
1. execution of the initial sequence of the animation: the system executes 1 frame of the initial sequence, simultaneously with 1 frame of the script. It it to be noticed that this phase is carried out only if the current temporal interval is preceded by a "pre-pause".
2. check of the end of the initial sequence: if the initial sequence has ended, the procedure goes to phase 3, otherwise it goes back to phase 1.
3. suspension of the animation: the animation is suspended, stopping it on its current frame, while the script continues to be executed (in other words, it is as if the animation stops and "waits" for the start of the current temporal interval, with which it will have to synchronize its own active sequence). It is to be noticed that, during the suspension, the "elementary animations" can continue being executed; the latter are for instance closing the eyelids or making little random body movements, that continue to let the character look alive.
4. test of the start of the current interval: if the current temporal interval has started, the procedure goes to phases 5 and 6, otherwise the test is repeated at each successive frame of the script.
5. execution of the active sequence:
   a. if the active sequence has the same duration of the temporal interval, execute each frame of the active sequence simultaneously with each frame of the temporal interval,
   b. otherwise (i.e. if the active sequence is shorter than the duration of the temporal interval) execute the active sequence in a cycle, i.e. simultaneously with each frame of the temporal interval, and repeating it from the beginning when it has arrived at the end.

   During the execution of the active sequence, both in case a) and b), elementary actions can be executed simultaneously with the possible beats of the temporal interval, as better described later regarding the procedure "Synchronize elementary animation". When the first frame of the animation is executed, therefore in this phase or in phase 1, the procedure increases the "history" (i.e. the attribute that records the number of executions of an animation).
6. test of the end of the current interval: if the current temporal interval has ended the procedure goes to phase 7, otherwise it goes back to phase 5.
7. execution of the final sequence of the animation: 1 frame of the final sequence is executed simultaneously with 1 frame of the script. It is to be noticed that this phase is executed only if the current temporal interval is followed by a "post-pause". Furthermore it is to be noticed that the only animations that can be executed during the "post-pauses" are the complex ones: in fact simple animations, as we will see in the next procedure, last at most as the temporal interval themselves.
8. test of the end of the final sequence: if the final sequence of the animation has ended, the procedure exits, otherwise it goes back to phase 7.

### Procedure "synchronize simple animation"

This procedure is called by the procedure **"Execute script",** with the goal of executing the simple animations chosen by the procedure **"Choose animation",** by synchronizing them with the current temporal interval and with the complex animations. The procedure is structured in the following phases:
1. choose when to start the animation: this phase is performed by calling the procedure **"Choose start frame for the animation"** (described later), that sets the time (frame of the current interval) in which to start the execution of the animation.
2. test of the start frame: the procedure checks whether the start frame of the animation has been reached: in this case the procedure goes to step 3, otherwise the script is executed and the test is repeated at each successive frame of the script.
3. execute the animation: the system plays the animation 1 frame at a time, simultaneously with 1 frame of the current temporal interval. At the execution of the first frame of the animation the procedure increases the "history" of the latter (i.e. the attribute that records the number of executions of an animation).
4. test of the end of the animation: if the animation has ended, the procedure exits, otherwise the procedure goes back to phase 3.

It is to be noticed that, thanks to the simultaneous use of this procedure and of the procedure **"Synchronize complex animation",** the simple animations last at most like the temporal interval in which they have to be executed, and therefore they are synchronized also with the complex animations: in fact the execution of simple animations coincides with the execution of the active sequence of complex animations, because the active sequence of the latter is let last as long as the temporal interval.

### Procedure "Choose start frame of the animation"

This procedure determines the frame in which to start an animation with respect to a temporal interval; it aims at raising the variability of execution, because it avoids that an animation is always and only made to start at the beginning of a temporal interval. The procedure computes the "available part" of the temporal interval, i.e. the difference between the number of frames of the interval and the number of frames of the animation, and uses it for "positioning" in a variable way the animation with respect to the interval. For instance, if the interval goes from frame 1 to frame 20 (therefore it lasts 20 frames), and the animation lasts 10 frames, the available part amounts to 20 - 10 = 10 frames; therefore the animation can start together with the temporal interval (frame 1) and finish before the end of the latter (i.e. it can finish at frame 10), or it could start after the beginning of the temporal interval and finish before its end (for instance, it could start at frame 5 and end at frame 15), or yet it could start after the start of the temporal interval and finish together with it (i.e. start at frame 10 and end at frame 20).

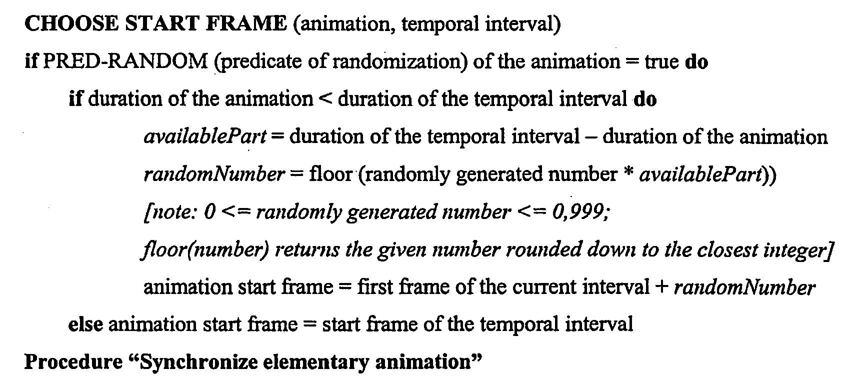

This procedure is used for synchronizing an elementary animation with the possible beats available in the multimedia object possibly contained in the current temporal interval.

Beats can be accompanied not only by visemes, but also by simultaneous movements of other body parts; furthermore, the beats can concern not only spoken pieces, but any type of multimedia object made up of several frames. For instance, regarding a movie, a beat could be a frame in which a specific object is shown; or, in an audio piece that reproduces a concert, a beat could be the frame in which the soloist starts playing.

It is to be noticed that elementary animations, thanks to the way in which they are realized (they concern hardly hinted movements and are made up of a very small number of frames), can be repeatedly interrupted and re-executed again not only in the obvious case in which they have arrived to the end, but at any time when a beat is present in the script.

The procedure for synchronizing an elementary animation with the beats includes the following steps:
1. test of the presence of beats in the interval: if the interval contains at least one beat, the procedure goes to phase 3, otherwise it goes to step 2.
2. activation of a rule or timer: the elementary animation is not to be synchronized with any beat, therefore the procedure activates a rule or internal timer prepared by the designer, to which the control of the animation is assigned, and the procedure exits. It is to be noticed that the rule can also state that the animation must remain fixed on a given frame in which the body segment is still in a particular position.
3. test of the end of the temporal interval: if the current interval had ended the procedure goes to phase 4, otherwise it goes to step 5.
4. interruption of the elementary animation: if the elementary animation is currently being executed, it is interrupted by applying the procedure "Interrupt animation" and the procedure exits.
5. test of the presence of a beat in the current frame: at each frame of the current temporal interval, if there is a beat the procedure goes to phase 6, otherwise the system executes 1 frame of the temporal interval and the procedure goes back to phase 3.
6. execution of the elementary animation: the elementary animation associated with the current body segment is executed. The execution consists in showing 1 frame of the animation at a time, simultaneously with the execution of 1 frame at a time of the temporal interval. If this phase has been reached from step 5, the elementary animation starts (or re-starts, if it was already being executed) from the first frame; conversely, if this phase has been reached from step 7, the execution of the animation goes on from the last executed frame. This step is simultaneously followed by the two tests contained in steps 3 and 7.
7. test of the end of the elementary animation: the procedure checks whether the end of the elementary animation has been reached: if so, the procedure goes back to phase 3, otherwise the procedure goes back to phase 6.

It is to be noticed that the test of step 3 can cause not only an interruption of the elementary animation, but also a fast re-execution of the latter simultaneously with beats that are very close to each other; in fact, if the test of step 3 has a negative outcome because the temporal interval is still going on, the test is immediately followed by the test of step 5, which can cause a new execution of the elementary animation even if the latter has not ended yet, causing the animation to re-start from the beginning. This is possible because the elementary animations, as already explained earlier, consist in hinted movements that last very few frames, and therefore the passage from one frame to another does not disturb the audience perception.

Furthermore, it is important to notice that phase 5, if desired, can be regulated by a probabilistic or random mechanism, which executes the elementary animation not every time a beat is found, but rather just a given number of times (e.g. 60% of the times, or with a random variation), in order to raise the variability of behavior of the character.

### Procedure "Interrupt animation"

This procedure interrupts an animation in a natural way, i.e. by avoiding that the movement stops abruptedly or starts when it is not necessary anymore. The cases considered by the procedure are three:
- if the start frame of the animation has not yet been executed, the execution of the animation is simply interrupted because the movement contained in it has not yet started;
- if the current frame of the animation (i.e. the one currently being executed) is included between the start and the return frame (and therefore the movement contained in the animation is already being executed), the procedure executes the frames from the return frame onward, thereby "skipping" the frames included between the current one and the return one, and the execution stops when the last frame is reached;
- if none of these conditions is satisfied, it means that the current frame of the animation is equal or subsequent to the return one: in this case, the procedure continues to execute the animation until the final frame is reached.

The first condition avoids to start the movement when the animation has to be interrupted; the second and third condition enable the movement to be stopped in the smallest possible time but without sudden and unnatural interruptions.

For instance, let us suppose to have an animation named "touch chin" of 14 frames, containing the movement of an arm that brings the hand to the chin for touching it: the start frame (by hypothesis number 3) would be the one in which the arm, from the side of the body, starts to raise itself towards the chin, while the return frame (by hypothesis number 10) would be the one in which the arm is "halfway" between the position in which the hand touches the chin and the position in which the arm goes back to the side of the body. If the procedure "Interrupt animation" is called before "touch chin" has arrived to the 3rd frame, the animation is immediately stopped because the arm has not yet started to raise itself; if "touch chin" must be interrupted while it is between frames 3 and 9, the execution will skip to frame 10 and will go on up to the last frame; finally, if the animation has to be interrupted when it is between frames 10 and 14, the execution goes on up to the end, so as to complete the "closure" of the movement.

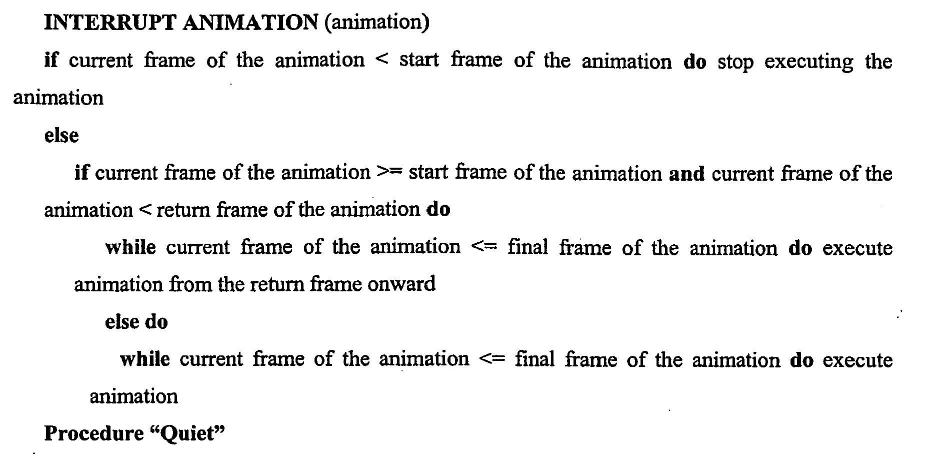

This procedure controls the animated character in the "quiet" state, i.e. when the character has to stay active without executing significant behaviors, and without selecting and synchronizing the behaviors in compliance with a script. In order to realize hardly hinted movements, this procedure is applied only to the animations for the quiet state that concern the root of the character's body, i.e. the character's most important body segment (e.g. the head in the case of human and animal characters). However, as it will be described in the procedure "Execute **animation in the quiet state",** the other body segments can continue performing small movements through the elementary animations.

The steps of this procedure are the following:
1. choice of the animation for the quiet state: this phase is realized by calling the procedure **"Choose animation for the quiet state".**
2. removal of pre-existing animations: the animations previously loaded and executed are removed.
3. loading of the chosen animation: the system loads the animation chosen in phase 1.
4. execution of the animation: this phase is realized by activating the procedure "Execute **animation in the quiet state",** described later.
5. return to 1: after the animation has been executed, the procedure goes back to phase 1 in order to choose and execute a new animation.

### Procedure "Execute animation in the quiet state"

This procedure executes the animations in a different way with respect to when the animations are to be synchronized with a temporal interval. Two cases can occur: (a) if the animation is "simple", i.e. it does not have a start and final sequence, it is executed simply by showing one of its frames at a time up to the end; (b) if the animation is "complex", the initial sequence is executed, then a timer is started, and it is used for executing the active sequence during all the time set by the timer itself, and finally the final sequence is executed. The timer, the duration of which can be modified in real time by means of rules set by the designer, enables the complex animation to be executed for a time deemed suitable for letting the character look active.

It is important to notice that, as in the case of **"Synchronize complex animations",** this procedure also executes some "elementary" animations, that aim at letting the character look alive, without interfering with other animations.

The procedure is structured as follows:
1. execute elementary animations: for the body segments different from the root, the available elementary animations are executed (choosing them at random).
2. test of the type of animation: if the animation chosen by the "Quiet" procedure is simple the procedure goes to phase 3, otherwise it goes to phase 5.
3. execute the animation: the system displays 1 frame of the current simple animation.
4. test of end of animation: if the current simple animation has ended, the procedure exits, otherwise it goes back to step 3.
5. execution of the initial sequence: the system displays 1 frame of the start sequence of the current complex animation.
6. test of the end of the initial sequence: if such sequence has finished, the procedure goes to phase 7, otherwise it goes back to step 5.
7. activate timer: the procedure initializes a timer that will last the time planned by the designer and can possibly be modified by internal rules (for instance, the rules can allow to have a different timer for each complex animation suited to the quiet state, or can allow that the duration of the timer varies randomly).
8. execution of the active sequence: the system executes 1 frame of the active sequence of the current complex animation. If the active sequence consists of several frames, and the last one has been reached (or the active sequence consists of only one frame), the execution of the frames starts again from the first (or only) one of the active sequence.
9. test of the end of timer: if the time of the timer has finished, the procedure goes to phase 10, otherwise it goes back to step 8.
10. execution of the final sequence: the system displays 1 frame of the final sequence of the current complex animation.
11. test of the finish of the final sequence: if the final sequence has finished, the procedure exits, otherwise it goes back to step 10.

For purely exemplifying purposes, the method according to the invention can be applied to the case of two subjects placed in the same environment: a human subject that tells a story, and an animal subject that plays the role of a cat. The man, in the guise of actor, has to alternatively play the roles of the various characters described in the story, while the cat has to exhibit the behaviors typical of its own species. The cat does not follow a script, and therefore its animations are selected only on the basis of the internal states of the character and of the environment; conversely, in the case of the man the animations are chosen also on the basis of the characteristics of the temporal intervals with which they have to be synchronized when the man is in the animation state of "execute script".

Thanks to the application of the method, the cat eats, sleeps, and asks for caresses, and the man acts in a suitable way (by choosing the behaviors most fit for each role and part of the story), variable (by using different behaviors at each new play of the same script), interactive (by enabling the audience to let him execute behaviors independent from the story, or to change the course of the story); and adaptive (by changing behaviors in accordance with the events).

Other examples of applications of the invention are those in which an animated character executes the following behaviors: it dances by synchronizing its movements with the times and beats of the music; it teaches a lesson by synchronizing its behaviors also with the projection of slides; it presents some products to be sold and can go into the presentation of specific products according to the requests coming from the user; it presents a theater or TV show; it plays the role of commentator of sports events (for instance horse races), during which the script can change in real time; it plays the role of a guide to a museum or exhibition; it recites a poem or a fairy-tale; it tells news; it comments a documentary, by synchronizing its behaviors also with the movies shown to the audience.

The present invention has been described so far with reference to some preferred forms of realization. It is to be understood that there may be other forms of realization that concern the same invention nucleus, all of them belonging to the range of protection of the claims listed below.

## Claims

1. Computer implemented method for controlling in real time an animation of at least one subject, said subject comprising one or more segments and being placed in an environment, the method comprising the steps of:
- defining one or more animation states, with the possibility of making a transition from one of said animation states to another according to predefined rules;
- defining for at least one of said animation states a sequence of temporal intervals, that comprises several successive temporal intervals, each of said temporal intervals being **characterized by** a set of first identifying data, said first identifying data comprising one or more of he following parameters:
- TIID- identifier of temporal interval;
- TIIF - start frame;
- TIEF- end frame;
- TID- interval duration;
- OBJ- multimedia objects contained in the interval;
- BEAT- beats;
- RAN- requested animations;
- TIALFA- alphanumeric attributes; and/or
- TINUM- numeric attributes,
- providing, for each of said one or more segments, a set of segment animations, each segment animation consisting of a sequence of frames and being **characterized by** a set of second identifying data, said second identifying data comprising one or more of the following parameters:
- AID - animation identifier;
- AD- animation duration;
- IFN - number of initial frames;
- AFN - number of active frames;
- FFN - number of final frames;
- ASF - start frame;
- ARF- return frame;
- FRED-CYCLE - cycle predicate;
- PRED-RANDOM - randomization predicate;
- PREC- preconditions;
- AALFA- alphanumeric attributes;
- ANUM - numeric attributes;
- S- scores;
- HIS- history; and/or
- WEIS - weighted score,
- selecting in real time one or more of said segment animations for each of said successive temporal intervals, by comparing said first and second identifying data and/or on the basis of said predefined rules; and
- executing in real time one or more of said selected segment animations, continuously identifying a current frame (CF), wherein said selected segment animations are executed in a synchronized way with respect to the characteristics of the current temporal interval (CTI), **wherein** said step of selecting the segment animations comprises a phase of extracting, among those associated with said segment, a first subset of animations that are synchronizable, applicable and requested, by comparing said first and second identifying data, and a phase of extracting, among those associated with said segment, a second subset of animations that are synchronizable and applicable, by comparing said first and second identifying data,
**wherein** said phase of extracting said first and second set of synchronizable animations, comprises:
- a step of distinguishing the animations associated with the segment, on the basis of the value of the parameters IFN and FFN, by defining as simple animations the animations in which IFN = 0 and FFN = 0, and as complex animations the animations in which IFN 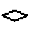 0 or FFN 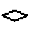 0, and
- for each of said simple animations, a step of comparing the parameters AD and TID, by defining a simple animation as synchronizable when AD <= TID.

2. Computer implemented method for controlling an animation according to claim 1, in which said segments of said subject are organized in a structure of a hierarchic tree type that includes at least one node, in which to said at least one node corresponds a respective segment of the subject.

3. Computer implemented method for controlling an animation according to anyone of the previous claims, in which said phase of extracting said first and second set of synchronizable animations, comprises for each of said complex animations, a step of computing a pre-pause parameter PRE-P = TIIF - CF and a post-pause parameter POST-P.

4. Computer implemented method for controlling an animation according to claim 3, in which POST-P is computed as the difference between the last frame of the sequence of temporal intervals and the last frame TIEF of the current temporal interval.

5. Computer implemented method for controlling an animation according to claim 3, in which POST-P is computed as the difference between a first frame TIIF of the temporal interval following the current one and the last frame TIEF of the current temporal interval.

6. Computer implemented method for controlling an animation according to anyone of the claims 3 to 5, in which said phase of extracting said first and second subsets of synchronizable animations, comprises a step of comparing among them the parameters IFN, PRE-P, FFN, POST-P, AFN and TID, by defining a complex animation as synchronizable when: IFN <= PRE-P and FFN <= POST-P and AFN <= TID.

7. Computer implemented method for controlling an animation according to anyone of the previous claims, in which said step of executing in real time the selected segment animations, comprises a phase of synchronizing each of said simple animations with the current temporal interval.

8. Computer implemented method for controlling an animation according to claim 7, in which said phase of synchronizing the simple animations comprises a step of determining an initial frame of the animation to execute, among those representative of the current temporal interval, by comparing the duration of the simple animation with the duration of the current temporal interval, so as to determine an interval of possible frames for starting the animation.

9. Computer implemented method for controlling an animation according to claim 8, in which said initial frame of the animation is chosen at random among the frames of said interval of possible frames.

10. Computer implemented method for controlling an animation according to anyone of the previous claims, in which said step of executing in real time the selected segment animations, comprises a phase of synchronizing each of said complex animations with the current temporal interval.

11. Computer implemented method for controlling an animation according to claim 10, in which said phase of synchronizing the complex animations comprises a first step of executing the initial frames IFN of the complex animation during the pre-pause PRE-P of the current temporal interval.

12. Computer implemented method for controlling an animation according to claim 11, in which said phase of synchronizing the complex animations comprises a second step of executing one or more times the active frames AFN of the complex animation, starting from the first frame of the current temporal interval.

13. Computer implemented method for controlling an animation according to claim 12, in which said phase of synchronizing the complex animations comprises a third step of executing the final frames AFN of the complex animation during the post-pause POST-P of the current temporal interval.

14. Computer implemented method for controlling an animation according to one of the claims from 11 to 13, in which said phase of synchronizing the complex animations comprises a step of simultaneously executing one or more simple animations by synchronizing them with the current temporal interval according to one of the claims from 7 to 9.

15. Computer implemented method for controlling an animation According to anyone of the previous claims, further comprising a step of interrupting said animation according to a manner depending on a condition selected from a set of conditions.

16. Computer implemented method for controlling an animation according to claim 15, in which said selected condition is one of the following:
- if the start frame of the animation has not yet been executed, the execution of the animation is interrupted;
- if the current frame of the animation is included between the start and the return frame, the procedure executes the frames from the return frame onward, thereby "sipping" the frames included between the current one and the return one, and the execution stops when the last frame, is reached;
- if the current frame of the animation is equal or subsequent to the return frame, the procedure continues to execute the animation until the final frame is reached.

17. Computer product, in particular a program for electronic computer, apt to implement a method according to anyone of the claims 1 to 16 when being executed on an electronic computer.

## Patentansprüche

1. Computerimplementiertes Verfahren zur Steuerung einer Animation mindestens einer Thematik in Echtzeit, wobei die Thematik ein oder mehrere Segmente aufweist und in einer Umgebung angeordnet ist, wobei das Verfahren die folgenden Schritte aufweist:
- Definition eines oder mehrerer Animationszustände, wobei die Möglichkeit besteht, von einem der Animationszustände in einen anderen Animationszustand gemäß vorher festgelegten Regeln überzugehen;
- Definition einer Folge von Zeitintervallen für mindestens einen der Animationszustände, welche mehrere aufeinanderfolgende Zeitintervalle aufweist, wobei jedes Zeitintervall durch eine Gruppe von ersten Identifizierungsdaten **gekennzeichnet** ist, wobei die ersten Identifizierungsdaten einen oder mehrere der folgenden Parameter aufweisen:
- TIID - Kennung bzw. Identifikator eines Zeitintervalls;
- TIIF- Start-Frame;
- TIEF- End-Frame;
- TID - Intervallsdauer;
- OBJ - in dem Intervall enthaltene Multimedia-Objekte;
- BEAT - Takte;
- RAN - geforderte Animationen;
- TIALFA - alphanumerische Attribute; und/oder
- TINUM - numerische Attribute;
- Bereitstellung für das eine oder jedes der Segmente einer Gruppe von Segment-Animationen, wobei jede Segment-Animation aus einer Folge von Frames besteht und durch eine Gruppe zweiter Identifizierungsdaten **gekennzeichnet** ist, wobei die zweiten Identifizierungsdaten einen oder mehrere der folgenden Parameter aufweisen:
- AID -Animations-Identifikator bzw. -Kennung;
- AD- Animationsdauer;
- IFN- Anzahl der Anfangs-Frames;
- FFN- Anzahl der End-Frames;
- ASF - Start-Frame;
- ARF - Return- bzw. Rückkehr-Frame;
- PRED-CYCLE - Zyklusprädikat- bzw. -eigenschaft;
- PRED-RANDOM - Randomisierungs- bzw. Wahllosigkeitsprädikat;
- PREC - Bedingungen;
- AALFA- alphanumerische Attribute;
- ANUM - numerische Attribute;
- S - Menge;
- HIS - Verlauf; und/oder
- WEIS - gewichtete Menge;
- Auswahl in Echtzeit einer oder mehrerer Segment-Animationen für jedes der aufeinanderfolgenden Zeitintervalle durch Vergleich der ersten und zweiten Identifizierungsdaten und/oder auf der Basis vorher festgelegter Regeln, und
- Ausführung in Echtzeit einer oder mehrerer selektierter Segment-Animationen, welche kontinuierlich einen augenblicklichen Frame (CF) identifizieren, wobei die selektierten Segment-Animationen auf synchronisierte Art und Weise bezüglich der Merkmale des augenblicklichen Zeitintervalls (CTT) ausgeführt werden;
**dadurch gekennzeichnet, dass** der Schritt der Auswahl der Segment-Animationen eine Phase der Gewinnung einer ersten Teilmenge von Animationen aus den dem Segment zugehörigen Segment-Animationen durch Vergleich der ersten und zweiten Identifizierungsdaten aufweist, wobei diese Animationen synchronisierbar, verwendbar und angefordert sind, sowie eine Phase der Gewinnung einer zweiten Teilmenge von synchroni-sierbaren und anwendbaren Animationen aus der dem Segment zugehörigen Animationen durch Vergleich der ersten und zweiten Identifizierungsdaten, wobei diese Phase der Gewinnung der ersten und zweiten Gruppe synchronisierbarer Animationen die folgenden Schritte aufweist:
- einen Schritt zur Unterscheidung der dem Segment zugehörigen Animationen auf der Basis des Werts der Parameter IFN und FFN , indem die Animationen als einfache Animationen definiert werden, in welchen IFN=0 und FFN=0 ist, und indem die Animationen als komplexe Animationen definiert werden, in welchen IFN<>0 oder
FFN<>0 ist, und
- für jede der einfachen Animationen einen Schritt des Vergleichs der Parameter AD und TID, indem eine einfache Animation als synchronisierbar definiert wird, wenn AD<=TID ist.

2. Computerimplementiertes Verfahren zur Steuerung einer Animation nach Anspruch 1, bei welchem die Segmente des Themas in einer hierarchischen Baumstruktur organisiert sind, welche mindestens einen Knoten aufweist, welchem ein entsprechendes Segment des Themas entspricht.

3. Computerimplementiertes Verfahren zur Steuerung einer Animation nach einem der vorhergehenden Ansprüche, bei welchem die Phase der Gewinnung der ersten und zweiten Gruppe synchronisierbarer Animationen für jede der komplexen Animationen einen Schritt der Berechnung eines Pre-Pause-Parameters PRE-P=TIIF-CF und eines Post-Pause-Parameters POST-P aufweist.

4. Computerimplementiertes Verfahren zur Steuerung einer Animation nach Anspruch 3, bei welchem der Parameter POST-P als Differenz zwischen dem letzten Frame der Folge von Zeitintervallen und dem letzten Frame TIEF des augenblicklichen Zeitintervalls berechnet wird.

5. Computerimplementiertes Verfahren zur Steuerung einer Animation nach Anspruch 3, bei welchem der Parameter POST-P als Differenz zwischen einem ersten Frame TIIF des Zeitintervalls, welches dem augenblicklichen Zeitintervall folgt, und dem letzten Frame TIEF des augenblicklichen Zeitintervalls berechnet wird.

6. Computerimplementiertes Verfahren zur Steuerung einer Animation nach einem der Ansprüche 3 bis 5, bei welchem die Phase der Gewinnung der ersten und zweiten Teilmenge synchronisierbarer Animationen einen Schritt des Vergleichs zwischen sich der Parameter IFN, PRE-P, FFN, POST-P, AFN und TID aufweist, indem eine komplexe Animation als synchronisierbar definiert wird, wenn: IFN<=PRE-P und FFN<=POST-P und AFN<=TID.

7. Computerimplementiertes Verfahren zur Steuerung einer Animation nach einem der vorhergehenden Ansprüche, bei welchem der Schritt der Ausführung in Echtzeit der selektierten Segment-Animationen eine Phase der Synchronisierung jeder der einfachen Animationen mit dem augenblicklichen Zeitintervall aufweist.

8. Computerimplementiertes Verfahren zur Steuerung einer Animation nach Anspruch 7, bei welchem die Phase der Synchronisierung der einfachen Animationen einen Schritt der Bestimmung eines Anfangs-Frames der auszuführenden Animation unter den Frames aufweist, welche das augenblickliche Zeitintervall darstellen, indem die Dauer der einfachen Animation mit der Dauer des augenblicklichen Zeitintervalls verglichen wird, um ein Intervall möglicher Frames zum Starten der Animation zu bestimmen.

9. Computerimplementiertes Verfahren zur Steuerung einer Animation nach Anspruch 8, bei welchem der Anfangs-Frame der Animation willkürlich aus den Frames des Intervalls möglicher Frames gewählt wird.

10. Computerimplementiertes Verfahren zur Steuerung einer Animation nach einem der vorhergehenden Ansprüche, bei welchem der Schritt der Ausführung in Echtzeit der selektierten Segment-Animationen eine Phase der Synchronisierung einer jeden komplexen Animation mit dem augenblicklichen Zeitintervall aufweist.

11. Computerimplementiertes Verfahren zur Steuerung einer Animation nach Anspruch 10, bei welchem die Phase der Synchronisierung der komplexen Animationen einen ersten Schritt der Ausführung der Anfangs-Frames IFN der komplexen Animation während der Pre-Pause PRE-P des augenblicklichen Zeitintervalls aufweist.

12. Computerimplementiertes Verfahren zur Steuerung einer Animation nach Anspruch 11, bei welchem die Phase der Synchronisierung der komplexen Animationen einen zweiten Schritt der einmaligen oder mehrmaligen Ausführung der aktiven Frames AFN der komplexen Animation ausgehend von dem ersten Frame des augenblicklichen Zeitintervalls aufweist.

13. Computerimplementiertes Verfahren zur Steuerung einer Animation nach Anspruch 12, bei welchem die Phase der Synchronisierung der komplexen Animationen einen dritten Schritt der Ausführung der End-Frames FFN der komplexen Animation während der Post-Pause POST-P des augenblicklichen Zeitintervalls aufweist.

14. Computerimplementiertes Verfahren zur Steuerung einer Animation nach einem der Ansprüche 11 bis 13, bei welchem die Phase der Synchronisierung der komplexen Animation einen Schritt der simultanen Ausführung einer oder mehrerer einfacher Animationen aufweist, indem diese gemäß einem der Ansprüche 7 bis 9 mit dem augenblicklichen Zeitintervall synchronisiert werden.

15. Computerimplementiertes Verfahren zur Steuerung einer Animation nach einem der vorhergehenden Ansprüche, welches des Weiteren einen Schritt der Unterbrechung der Animation in einer Weise aufweist, welche von einer aus einem Satz von Bedingungen ausgewählten Bedingung abhängt.

16. Computerimplementiertes Verfahren zur Steuerung einer Animation nach Anspruch 15, bei welchem die ausgewählte Bedingung eine der folgenden Bedingungen ist:
- falls der Start- Frame der Animation noch nicht ausgeführt worden ist, wird die Ausführung der Animation unterbrochen;
- falls der augenblickliche Frame der Animation zwischen dem Start- und dem Umkehr- bzw. Return-Frame liegt, führt das Verfahren die Frames von dem Umkehr- bzw. Return-Frame aus vorwärts aus, wobei diejenigen Frames ausgelassen bzw. "geschwänzt" werden, welche zwischen dem augenblicklichen Frame und dem Umkehr-Frame liegen, und die Ausführung wird gestoppt, wenn der letzte Frame erreicht ist;
- falls der augenblickliche Frame der Animation identisch mit dem Umkehr- bzw. Return-Frame ist oder diesem nachfolgt, fährt das Verfahren mit der Ausführung der Animation fort, bis der letzte Frame erreicht ist.

17. Computerprodukt, insbesondere ein Programm für einen elektronischen Computer, welches in der Lage ist, ein Verfahren gemäß einem der Ansprüche 1 bis 16 zu implementieren, wenn es auf einem elektronischen Rechner ausgeführt wird.

## Revendications

1. Procédé mis en oeuvre par ordinateur pour contrôler en temps réel une animation d'au moins un sujet, ledit sujet comprenant un ou plusieurs segments et étant placé dans un environnement, le procédé comprenant les étapes consistant à :
- définir un ou plusieurs états d'animation, avec la possibilité d'effectuer une transition d'un desdits états d'animation à un autre selon des règles prédéfinies ;
- définir pour au moins un desdits états d'animation une séquence d'intervalles temporels, qui comprend plusieurs intervalles temporels successifs, chacun desdits intervalles temporels étant **caractérisé par** un ensemble de premières données d'identification, lesdites premières données d'identification comprenant un ou plusieurs des paramètres suivants :
- TIID - identificateur d'intervalle temporel ;
- TIIF - trame de début ;
- TIEF - trame de fin ;
- TID - durée d'intervalle ;
- OBJ - objets multimédias contenus dans l'intervalle ;
- BEAT - battements ;
- RAN - animations demandées ;
- TIALFA - attributs alphanumériques ; et/ou
- TINUM - attributs numériques,
- fournir, pour chacun desdits un ou plusieurs segments, un ensemble d'animations de segment, chaque animation de segment se composant d'une séquence de trames et étant **caractérisée par** un ensemble de secondes données d'identification, lesdites secondes données d'identification comprenant un ou plusieurs des paramètres suivants :
- AID - identificateur d'animation ;
- AD - durée d'animation ;
- IFN - nombre de trames initiales ;
- AFN - nombre de trames actives ;
- FFN - nombre de trames finales ;
- ASF - trame de début ;
- ARF - trame de retour ;
- PRED-CYCLE - prédicat de cycle ;
- PRED-RANDOM - prédicat de randomisation ;
- PREC - préconditions ;
- AALFA - attributs alphanumériques ;
- ANUM - attributs numériques ;
- S - scores ;
- HIS-historique ; et/ou
- WEIS - score pondéré,
- sélectionner en temps réel une ou plusieurs desdites animations de segment pour chacun desdits intervalles temporels successifs, en comparant lesdites premières et secondes données d'identification et/ou sur la base desdites règles prédéfinies ; et
- exécuter en temps réel une ou plusieurs desdites animations de segment sélectionnées, en identifiant en continu une trame actuelle (CF), où lesdites animations de segment sélectionnées sont exécutées de façon synchronisée par rapport aux caractéristiques de l'intervalle temporel actuel (CTI),
dans lequel ladite étape de sélection des animations de segment comprend une phase consistant à extraire, parmi celles associées audit segment, un premier sous-ensemble d'animations qui sont synchronisables, applicables et demandées, en comparant lesdites premières et secondes données d'identification, et une phase consistant à extraire, parmi celles associées audit segment, un second sous-ensemble d'animations qui sont synchronisables et applicables, en comparant lesdites premières et secondes données d'identification,
dans lequel ladite phase consistant à extraire ledit premier et ledit second ensemble d'animations synchronisables comprend :
- une étape consistant à distinguer les animations associées au segment, sur la base de la valeur des paramètres IFN et FFN, en définissant comme animations simples les animations dans lesquelles IFN=0 et FFN=0, et comme animations complexes les animations dans lesquelles IFN<>0 ou FFN<>0, et
- pour chacune desdites animations simples, une étape consistant à comparer AD et TID, en définissant une animation simple comme synchronisable lorsque AD<=TID.

2. Procédé mis en oeuvre par ordinateur pour contrôler une animation selon la revendication 1, dans lequel lesdits segments dudit sujet sont organisés dans une structure d'un type d'arbre hiérarchique qui inclut au moins un noeud, dans lequel audit au moins un noeud correspond un segment respectif du sujet.

3. Procédé mis en oeuvre par ordinateur pour contrôler une animation selon l'une quelconque des revendications précédentes, dans lequel ladite phase consistant à extraire ledit premier et ledit second ensemble d'animations synchronisables comprend, pour chacune desdites animations complexes, une étape consistant à calculer un paramètre de pré-pause PRE-P = TIIF-CF et un paramètre de post-pause POST-P.

4. Procédé mis en oeuvre par ordinateur pour contrôler une animation selon la revendication 3, dans lequel POST-P est calculé comme la différence entre la dernière trame de la séquence d'intervalles temporels et la dernière trame TIEF de l'intervalle temporel actuel.

5. Procédé mis en oeuvre par ordinateur pour contrôler une animation selon la revendication 3, dans lequel POST-P est calculé comme la différence entre une première trame TIIF de l'intervalle temporel suivant l'actuel et la dernière trame TIEF de l'intervalle temporel actuel.

6. Procédé mis en oeuvre par ordinateur pour contrôler une animation selon l'une quelconque des revendications 3 à 5, dans lequel ladite phase consistant à extraire ledit premier et ledit second sous-ensemble d'animations synchronisables comprend une étape consistant à comparer entre eux les paramètres IFN, PRE-P, FFN, POST-P, AFN et TID, en définissant une animation complexe comme synchronisable lorsque : IFN<=PRE-P et FFN<=POST-P et AFN<=TID.

7. Procédé mis en oeuvre par ordinateur pour contrôler une animation selon l'une quelconque des revendications précédentes, dans lequel ladite étape consistant à exécuter en temps réel les animations de segment sélectionnées comprend une phase consistant à synchroniser chacune desdites animations simples avec l'intervalle temporel actuel.

8. Procédé mis en oeuvre par ordinateur pour contrôler une animation selon la revendication 7, dans lequel ladite phase consistant à synchroniser les animations simples comprend une étape consistant à déterminer une trame initiale de l'animation à exécuter, parmi celles représentatives de l'intervalle temporel actuel, en comparant la durée de l'animation simple avec la durée de l'intervalle temporel actuel, afin de déterminer un intervalle de trames possibles pour démarrer l'animation.

9. Procédé mis en oeuvre par ordinateur pour contrôler une animation selon la revendication 8, dans lequel ladite trame initiale de l'animation est choisie aléatoirement parmi les trames dudit intervalle de trames possibles.

10. Procédé mis en oeuvre par ordinateur pour contrôler une animation selon l'une quelconque des revendications précédentes, dans lequel ladite étape consistant à exécuter en temps réel les animations de segment sélectionnées comprend une phase consistant à synchroniser chacune desdites animations complexes avec l'intervalle temporel actuel.

11. Procédé mis en oeuvre par ordinateur pour contrôler une animation selon la revendication 10, dans lequel ladite phase consistant à synchroniser les animations complexes comprend une première étape consistant à exécuter les trames initiales IFN de l'animation complexe pendant la pré-pause PRE-P de l'intervalle temporel actuel.

12. Procédé mis en oeuvre par ordinateur pour contrôler une animation selon la revendication 11, dans lequel ladite phase consistant à synchroniser les animations complexes comprend une deuxième étape consistant à exécuter une ou plusieurs fois les trames actives AFN de l'animation complexe, en commençant par la première trame de l'intervalle temporel actuel.

13. Procédé mis en oeuvre par ordinateur pour contrôler une animation selon la revendication 12, dans lequel ladite phase consistant à synchroniser les animations complexes comprend une troisième étape consistant à exécuter les trames finales FFN de l'animation complexe pendant la post-pause POST-P de l'intervalle temporel actuel.

14. Procédé mis en oeuvre par ordinateur pour contrôler une animation selon l'une quelconque des revendications 11 à 13, dans lequel ladite phase consistant à synchroniser les animations complexes comprend une étape consistant à exécuter simultanément une ou plusieurs animations simples en les synchronisant avec l'intervalle temporel actuel selon une des revendications 7 à 9.

15. Procédé mis en oeuvre par ordinateur pour contrôler une animation selon l'une quelconque des revendications précédentes, comprenant en outre une étape consistant à interrompre ladite animation selon une manière dépendant d'une condition sélectionnée parmi un ensemble de conditions.

16. Procédé mis en oeuvre par ordinateur pour contrôler une animation selon la revendication 15, dans lequel ladite condition sélectionnée est une des suivantes :
- si la trame de début de l'animation n'a pas encore été exécutée, l'exécution de l'animation est interrompue ;
- si la trame actuelle de l'animation est incluse entre la trame de début et de retour, la procédure exécute les trames à partir de la trame de retour, « sautant » ainsi les trames incluses entre l'actuelle et celle de retour, et l'exécution s'arrête lorsque la dernière trame est atteinte ;
- si la trame actuelle de l'animation est égale ou postérieure à la trame de retour, la procédure continue à exécuter l'animation jusqu'à ce que la trame finale soit atteinte.

17. Produit informatique, en particulier programme pour un ordinateur électronique, apte à mettre en oeuvre un procédé selon l'une quelconque des revendications 1 à 16 lorsqu'il est exécuté sur un ordinateur électronique.
